# EUROPEAN PATENT APPLICATION

(11) **EP 4 737 964 A1**
(43) Date of publication of application: **06.05.2026**
(21) Application number: 24849066.6
(22) Date of filing: 25.07.2024
(51) Int. Cl.: G02B 6/30

(54) **OPTICAL MODULE AND COMPONENT THEREOF**

(30) Priority: 31.07.2023 JP 2023124896
(71) Applicant: NTT Innovative Devices Corporation, Yokohama-shi, Kanagawa 221-0031 (JP); NTT, Inc., Tokyo 100-8116 (JP)
(72) Inventor: NAKANISHI Tomohiro, Yokohama-shi, Kanagawa 221-0031 (JP); TANAKA Katsuya, Yokohama-shi, Kanagawa 221-0031 (JP); OZAWA Toshiyuki, Yokohama-shi, Kanagawa 221-0031 (JP); TOMITA Hiroshi, Kawasaki-shi, Kanagawa 212-8510 (JP); YAMADA Takashi, Musashino-shi, Tokyo 180-8585 (JP)
(74) Representative: TBK
(86) International application number: PCT/JP2024/026715
(87) International publication number: WO 2025/028412

(57) **Abstract**

The present disclosure provides a component for an optical device for easily adhesively fixing a tube at an appropriate position, and an optical module having the component. A component used for a connection section between a silicon chip integrated on a device substrate and an optical fiber has a flat plate-like upper section, and a first lateral section and a second lateral section that are substantially perpendicular to the upper section. The component also has a concave section that is formed by the upper section, the first lateral section, and the second lateral section, and that houses a fiber block that holds the optical fiber. In the concave section, the second lateral section has an opening for drawing out the optical fiber in an longitudinal direction. In addition, the component has a pressing section formed on the upper section and substantially perpendicular to the upper section. The pressing section is configured so that an end of a tube having a hollow section through which the optical fiber passes abuts against the pressing section.

## Description

### Technical Field

The present disclosure relates to an optical module, and more particularly relates to a component used for a connection section between an optical device and an optical fiber, and an optical module that includes the component.

### Background Art

Conventionally, there has been a demand to reduce the size and power consumption and increase the transmission speeds of optical transceiver modules within networks. There are increasing expectations that a coherent optical subassembly (COSA) which integrates an optical transmission circuit or an optical reception circuit onto a small silicon chip and co-packages this with an electronic circuit such as an amplifier can be used as a device that achieves these goals.

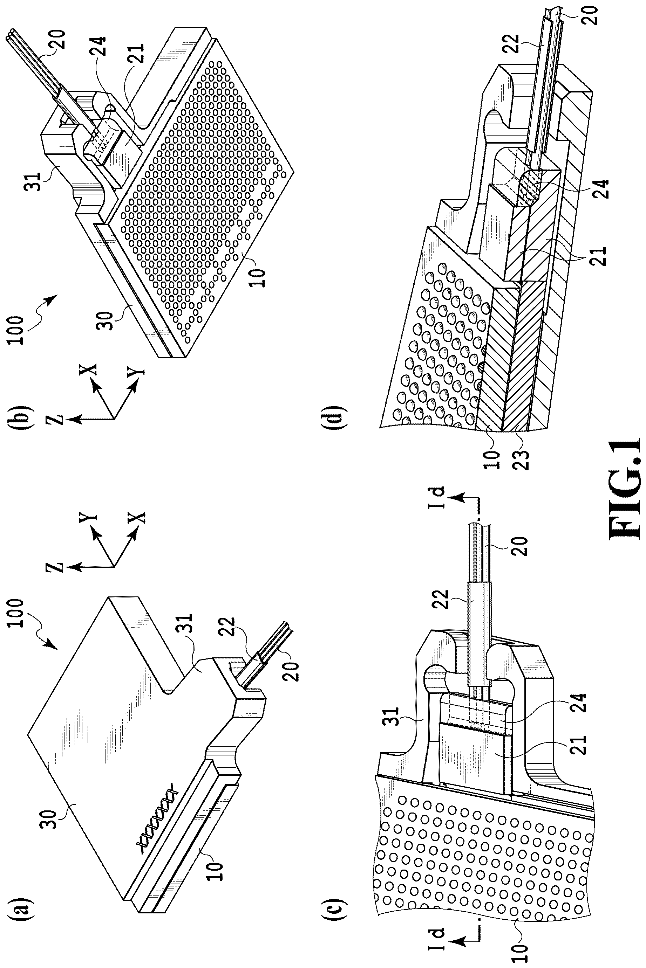

Figure 1 shows a conventional COSA 100. Figure 1(a) is a perspective view from the top surface direction, Figure 1(b) is a perspective view from the underside direction, Figure 1(c) is a perspective view from the underside direction of an input/output section of the COSA 100, and Figure 1(d) is a cross-sectional view of the input/output section of the COSA 100 taken along a section line Id-Id. Note that, a BGA (ball grid array) side of a device substrate 10 constituting the COSA 100 is referred to as the underside.

As illustrated in Figure 1, the COSA 100 has a device substrate 10 on which a silicon chip 23 including a waveguide is integrated utilizing silicon photonics technology, and a lid 30 that protects these components. In Figure 1, an optical fiber 20 that is optically connected to the waveguide formed on the surface of the silicon chip 23 is illustrated. Note that, the silicon chip 23 is integrated so that the surface on which the waveguide is formed faces the underside of the device substrate 10.

A fiber block 21 is directly fixed to the silicon chip 23 so that the optical fiber 20 connects to the waveguide of the silicon chip 23 via the fiber block 21. As illustrated in Figure 1(d), there is a slight gap between the fiber block 21 and the lid 30, and the fiber block 21 does not come into contact with the lid 30. In Figure 1, the optical fiber 20 is shown as a fiber ribbon in which a plurality of optical fibers are aligned. The tips of the respective core wires of the optical fiber 20 are aligned along a V-groove of the fiber block 21. In Figure 1, a fiber protection resin 24 that is arranged opposite the V-groove of the fiber block 21 is also shown. The optical fiber 20 is fixed between the V-groove and the fiber protection resin 24. The tip of each core wire extends through the V-groove to an end face of the fiber block 21. An end face of the silicon chip 23 and an end face of the fiber block 21 are connected and fixed opposing each other. Note that, in order to prevent reflection at the end face of the silicon chip 23, the orientation of the waveguide in the vicinity of the end face of the silicon chip 23 is such that the waveguide does not become perpendicular to the end face (is not oriented in the X direction). The longitudinal direction of the optical fiber 20 is also arranged so as not to be perpendicular to the end face of the silicon chip 23.

The lid 30 illustrated in Figure 1 has an optical fiber coupling section protective section 31 for protecting the coupling section between the waveguide formed on the surface of the silicon chip 23 and the optical fiber 20.

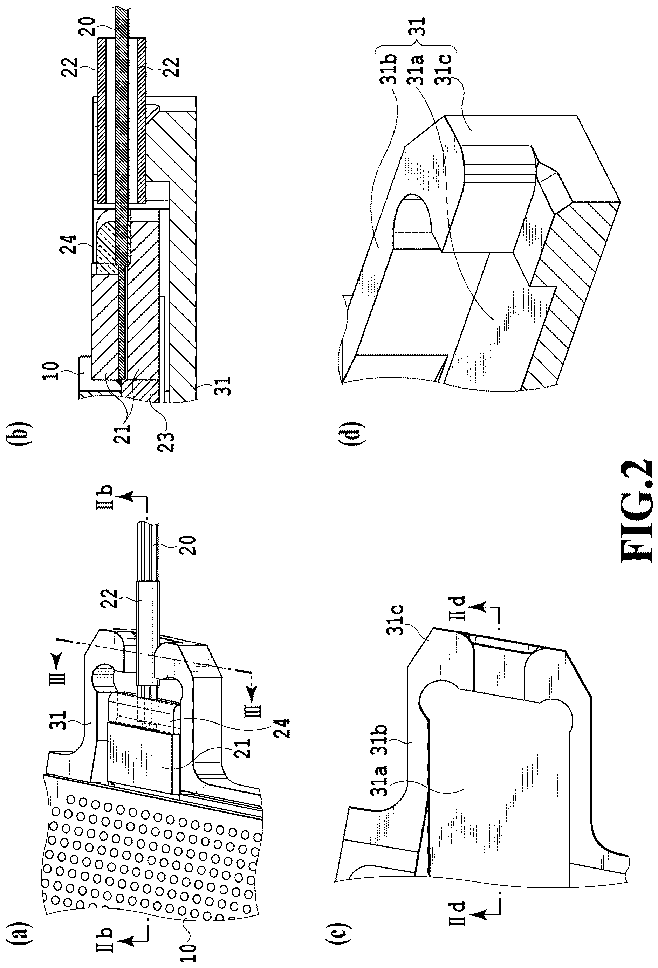

In Figure 2, a conventional optical fiber coupling section protective section 31 is illustrated. Figure 2(a) is a perspective view from the underside direction of the input/output section of the COSA 100 that is similar to Figure 1(c), Figure 2(b) is a cross-sectional view in the longitudinal direction of the optical fiber 20 taken along a section line IIb-IIb, Figure 2(c) is a plan view from the underside direction of one part of the optical fiber coupling section protective section 31, and Figure 2(d) is a cross-sectional view of one part of the optical fiber coupling section protective section 31 taken along a section line IId-IId.

The optical fiber coupling section protective section 31 has a flat plate-like upper section 31a, and a lateral section 31b and a lateral section 31c that are substantially perpendicular to the upper section 31a in three directions surrounding the fiber block. As illustrated in Figure 2(a), the fiber block 21 is housed within a space formed by the upper section 31a, the lateral section 31b, and the lateral section 31c. The lateral section 31c has an opening for passing the optical fiber 20 through.

The optical fiber 20 is weak against a force in a direction perpendicular to the longitudinal direction thereof. Therefore, as illustrated in Figure 2, a tube 22 is provided for protecting the optical fiber 20 so that the optical fiber 20 does not directly contact the opening. The optical fiber 20 passes through the tube 22 and is fixed to the fiber block 21.

The inner diameter of the tube 22 is sufficiently larger than the sum of the diameters of the individual core wires of the optical fiber 20. Therefore, the tube 22 can freely move in the longitudinal direction of the optical fiber 20. For this reason, the tube 22 is fixed to the optical fiber coupling section protective section 31 so as not to move.

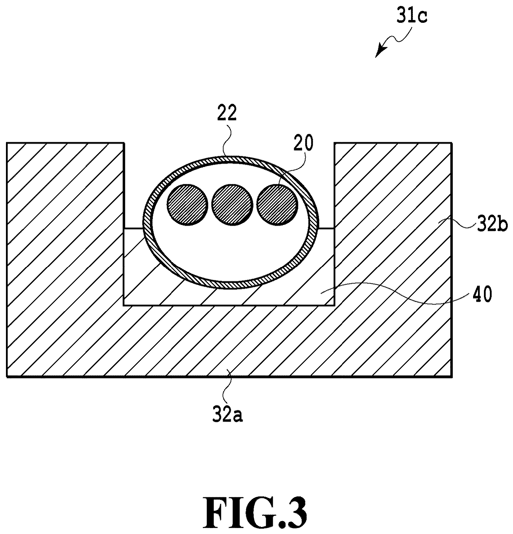

Figure 3 is a cross-sectional view of the opening of the lateral section 31c taken along a section line III-III shown in Figure 2(a). The opening has an upper section 32a and a lateral section 32b. The tube 22 is arranged so as to pass through the opening, and is adhesively fixed in place by an adhesive 40 inserted between the tube 22 and the opening.

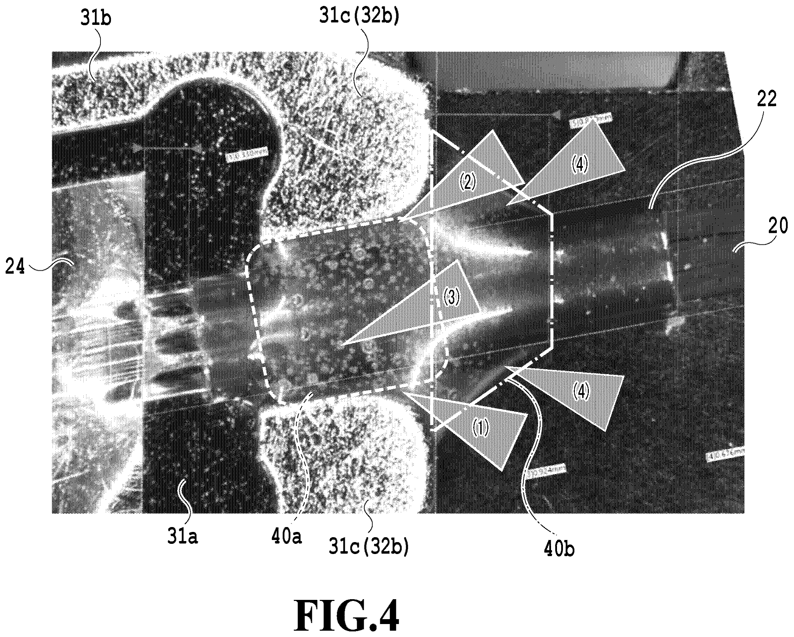

Figure 4 is an enlarged view of the underside of the opening of the lateral section 31c of the optical fiber coupling section protective section 31. The adhesive 40 for adhesively fixing the tube 22 to the opening is injected in the order of (1) to (4) in Figure 4. First, the adhesive 40 that is fluid is injected between the lateral section 32b and the tube 22 from the positions of the tips of the triangles indicated by (1) and (2) to temporarily fix the tube 22 in the state illustrated in Figure 3. Next, the adhesive 40 is added from the positions of the tips of the triangles indicated by (3) and (4) to inject the adhesive 40 onto the upper section of the tube 22 and the outer side of the opening to form fillets 40a and 40b. A quadrangle indicated by dashed lines in Figure 4 indicates the fillet 40a on the opposite side to the upper section 32a of the tube 22, and a trapezoid indicated by an alternate dot and dash line indicates the fillet 40b on the outer side of the opening of the lateral section 31c (32b) of the tube 22. The optical fiber 20 extends from the outer side to the inner side of the opening of the lateral section 31c through the inside (hollow section) of the tube 22. A portion of the optical fiber 20 from which the cladding has been removed (exposed core wires located from the outer side to the inner side of the opening of the lateral section 31c) that emerges from the hollow section of the tube 22 is fixed in a state in which the aforementioned portion is sandwiched between the V-groove of the fiber block 21 and the fiber protection resin 24.

When manufacturing an optical module, a process in which a tip of the tube 22 is positioned on the fiber block 21 side and fixed in the opening is an important process. If the distance between the fiber block 21 and the tip of the tube 22 is too short, the optical fiber coupling section protective section 31 will expand and contract due to the influence of heat in a reflow process that is a subsequent process, which will cause the tip of the tube 22 to move and apply pressure to the fiber block 21. As a result, the possibility of coupling loss occurring between the waveguide formed on the surface of the silicon chip 23 and the optical fiber 20 will increase. Conversely, if the distance between the fiber block 21 and the tip of the tube 22 is too long, for example in a case where the tip of the tube 22 is located within the opening, there is a possibility that the tube 22 will not be sufficiently fixed by the adhesive 40, which may result in a reduction in reliability. In addition, if the adhesive 40 adheres to the exposed optical fiber 20 between the fiber block 21 and the tube 22, or if the tube 22 and the optical fiber 20 are bonded and fixed to each other due to the adhesive 40 flowing into the hollow section of the tube 22, there is a possibility that the optical fiber 20 will be damaged by stress caused by expansion and contraction of the optical fiber coupling section protective section 31 that occurs during the subsequent reflow process.

To prevent this, the tip of the tube 22 that has a predetermined length must be positioned at a predetermined position. For example, it is necessary to confirm whether the interval between one tip of the tube 22 that has a predetermined length (for example, 3.6 ± 0.3 mm) and the fiber block 21 is within a predetermined range (for example, 0.25 mm to 0.5 mm). At the same time, it is also necessary to confirm whether the other tip of the tube 22 is within a predetermined range (for example, 2 mm or less) on the outer side of the opening of the lateral section 31c of the optical fiber coupling section protective section 31.

### Summary of Invention

Therefore, the process of positioning a tip of the tube 22 on the fiber block 21 side and the process of fixing the tube 22 to the opening of the optical fiber coupling section protective section 31 with the adhesive 40 have required delicate work under a microscope, and the efficiency of these processes has been particularly poor.

The disclosure of the present application has been made in view of the foregoing problem, and an object thereof is to provide a component for an optical device for enabling a tube to be easily adhesively fixed in an appropriate position, and an optical module that includes the component.

A component according to one embodiment of the present disclosure is a component that is used for a connection section between a silicon chip integrated on an optical device substrate and an optical fiber. The component includes: a flat plate-like upper section, and a first lateral section and a second lateral section which are substantially perpendicular to the upper section; a concave section formed by the upper section, the first lateral section, and the second lateral section; and a pressing section that is formed at a predetermined position on the upper section inside the concave section and is substantially perpendicular to the upper section.

The component according to one embodiment also has a tube having a hollow section which the optical fiber passes through that is placed in an opening of the second lateral section, wherein the pressing section is formed at a position at which the pressing section abuts against a part of the tube and does not come into contact with the optical fiber.

The pressing section in the component according to one embodiment is formed so as to abut against a part of the tube at a single point.

The pressing section in the component according to one embodiment is formed so as to abut against a part of the tube at at two points.

The pressing section that abuts against a part of the tube at at two points in the component according to one embodiment is connected to the upper section side.

The component according to one embodiment further includes an adhesive housing section that is formed between the pressing section and the opening.

The adhesive housing section in the component according to one embodiment is formed by cutting further than a face where the pressing section is formed.

An optical module according to one embodiment of the present disclosure includes: any one of the components described above, the optical device substrate, and a waveguide formed on a surface of the silicon chip, wherein the waveguide and the optical fiber are optically coupled at an end face of the silicon chip.

As described above, according to one embodiment of the present disclosure, the pressing section of the component for an optical device makes it possible to easily adhesively fix a tube at a predetermined position of the component for an optical device. Further, it is possible to efficiently manufacture an optical module that includes the component for an optical device having the pressing section.

### Brief Description of Drawings

[Figure 1] Figure 1 shows a conventional Coherent Optical SubAssembly (COSA), in which (a) is a perspective view from a top surface direction, (b) is a perspective view from an underside direction, (c) is a perspective view from an underside direction of an input/output section of the COSA, and (d) is a cross-sectional view of the input/output section of the COSA taken along an Id-Id section line.
[Figure 2] Figure 2 shows a conventional optical fiber coupling section protective section, in which (a) is a perspective view from an underside direction of an input/output section of the COSA, (b) is a cross-sectional view in the longitudinal direction of an optical fiber taken along an IIb-IIb section line, (c) is a plan view from the underside direction of one part of an optical fiber coupling section protective section, and (d) is a cross-sectional view of one part of the optical fiber coupling section protective section taken along an IId-IId section line.
[Figure 3] Figure 3 is a cross-sectional view of an opening of a lateral section of the conventional optical fiber coupling section protective section taken along an III-III section line in Figure 2.
[Figure 4] Figure 4 is an enlarged view of the top surface of the opening of the lateral section of the conventional optical fiber coupling section protective section.

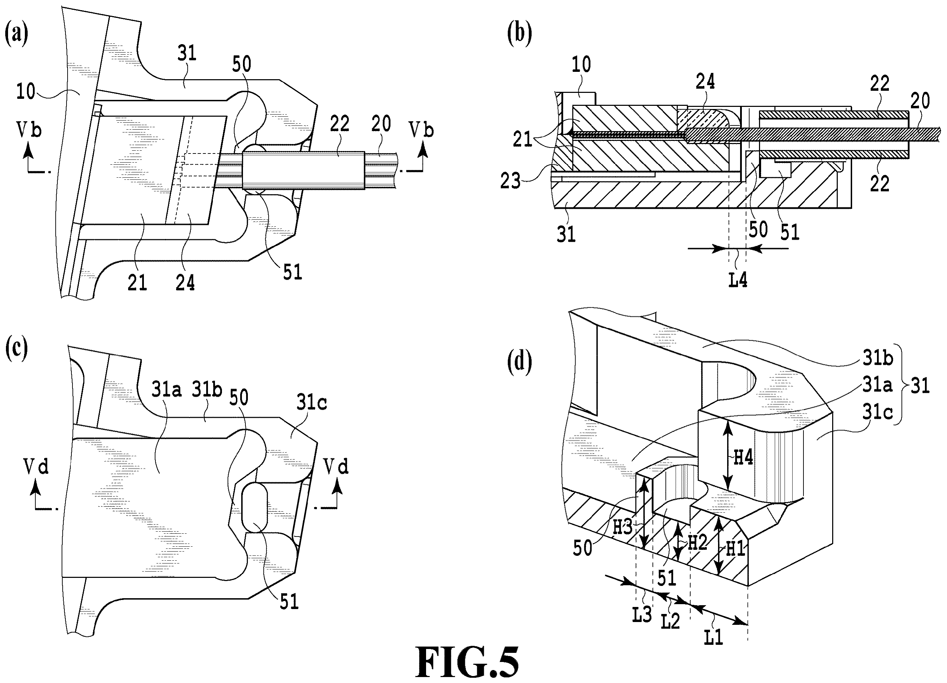

[Figure 5] Figure 5 shows an optical fiber coupling section protective section of an optical module (COSA) according to one embodiment of the present disclosure, in which (a) is a perspective view from an underside direction of an input/output section of the COSA, (b) is a cross-sectional view in the longitudinal direction of an optical fiber taken along a Vb-Vb section line, (c) is a plan view from the underside direction of one part of the optical fiber coupling section protective section, and (d) is a cross-sectional view of one part of the optical fiber coupling section protective section taken along a Vd-Vd section line.

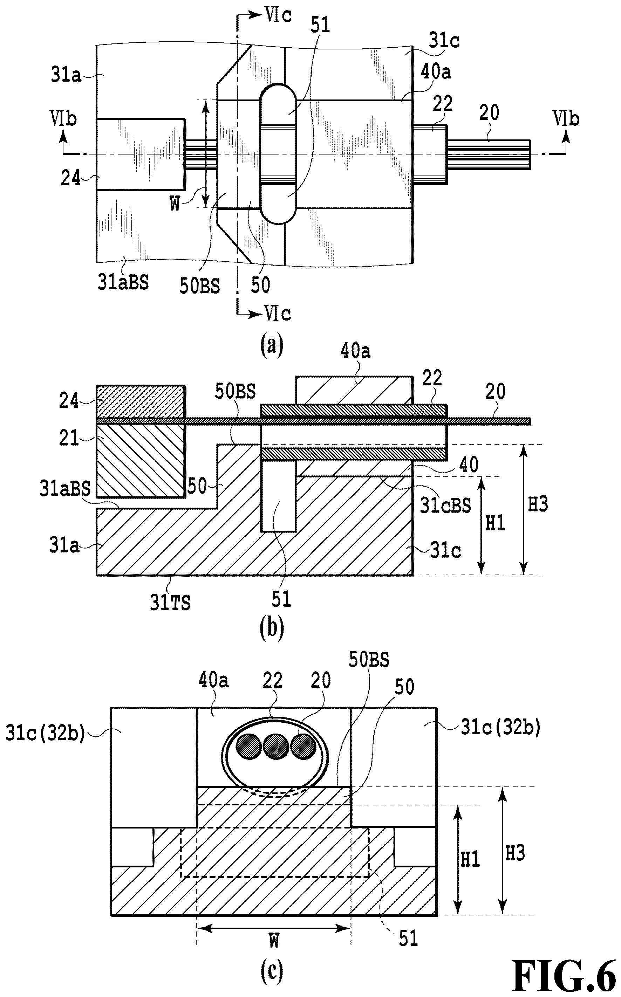

[Figure 6] Figure 6 shows a first example of a pressing section of the optical fiber coupling section protective section of the COSA according to one embodiment of the present disclosure, in which (a) is a plan view from an underside direction, (b) is a cross-sectional view taken along a VIb-VIb section line, and (c) is a cross-sectional view taken along a VIc-VIc section line.

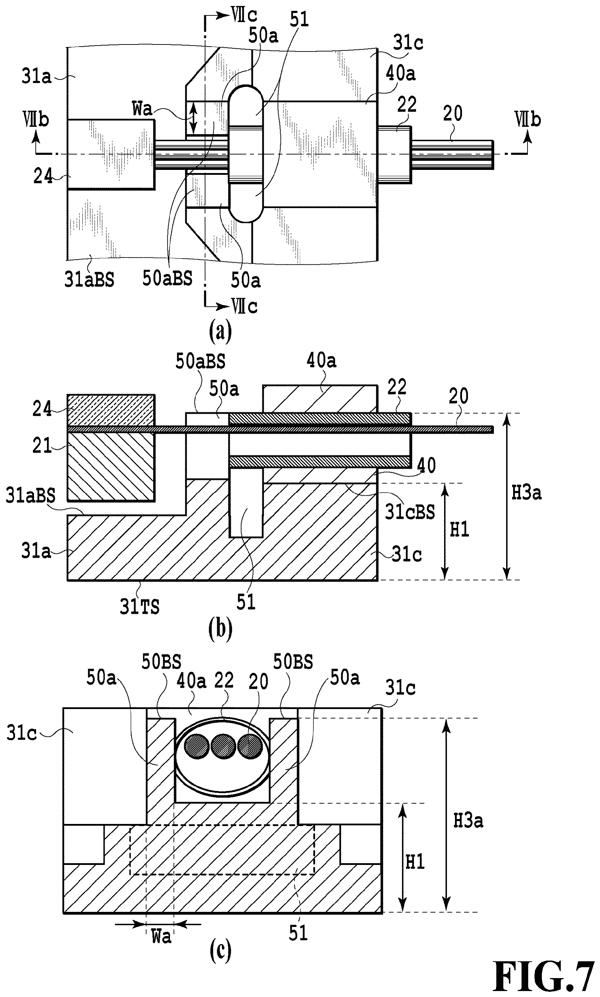

[Figure 7] Figure 7 shows a second example of a pressing section of the optical fiber coupling section protective section of the COSA according to one embodiment of the present disclosure, in which (a) is a plan view from an underside direction, (b) is a cross-sectional view taken along a VIIb-VIIb section line, and (c) is a cross-sectional taken view along a VIIc-VIIc section line.

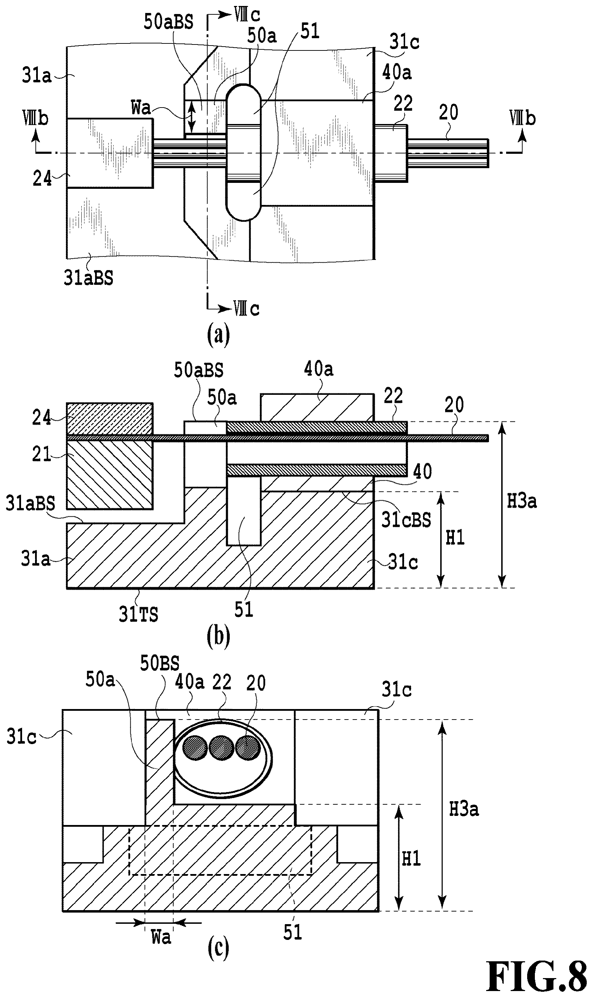

[Figure 8] Figure 8 shows a third example of a pressing section of the optical fiber coupling section protective section of the COSA according to one embodiment of the present disclosure, in which (a) is a plan view from an underside direction, (b) is a cross-sectional view, and (c) is a cross-sectional view taken along a VIIIc-VIIIc section line.

### Description of Embodiment

Hereinafter, an embodiment of the present disclosure is described in detail with reference to the drawings. The same or similar reference symbols denote the same or similar elements, and redundant descriptions thereof may be omitted. Materials and numerical values used in the following description are provided as examples, and the present disclosure can also be implemented using other materials and other numerical values. Hereinafter, a coherent optical subassembly (COSA) is exemplified as an example of an optical device. It goes without saying that, besides a COSA, the present disclosure can also be implemented in any optical device within a range that does not depart from the gist of the present disclosure. Note that, in the following description, a lid 30 side of an optical module 100 is referred to as the upward direction, and a device substrate 10 side is referred to as the downward direction.

Figure 5 shows an optical fiber coupling section protective section 31 of a COSA according to one embodiment of the present disclosure. The optical fiber coupling section protective section 31 constitutes one part of the lid 30 described above with reference to Figure 1. As described above, the optical fiber coupling section protective section 31 is a component for an optical device that protects a coupling section between the waveguide formed on the surface of the silicon chip 23 and the optical fiber 20. The optical fiber coupling section protective section 31 may be formed integrally with the lid 30 that protects the device substrate 10 on which the silicon chip 23 is integrated, or may be formed separately therefrom.

The protecting lid 30 can be formed by subjecting a metal plate to shaving machining. In the case of forming the lid 30 and the optical fiber coupling section protective section 31 separately from each other, if the lid 30 is a metal, a ceramic material or a resin material can also be used as the material of the optical fiber coupling section protective section 31. In consideration of heat dissipation from the device substrate 10 on which the silicon chip 23 is integrated, the lid 30 is preferably a metal with high thermal conductivity. In the present embodiment, the optical fiber coupling section protective section 31 is formed integrally with the lid 30 by subjecting a metal plate to shaving machining.

Similarly to the conventional optical fiber coupling section protective section 31, the optical fiber coupling section protective section 31 of the present embodiment also has a flat plate-like upper section 31a, and a lateral section 31b and a lateral section 31c which are substantially perpendicular to the upper section 31a so as to surround a fiber block. As illustrated in Figure 5(a), a fiber block 21 is housed in a space (concave section) formed by the upper section 31a, the lateral section 31b, and the lateral section 31c. There is a gap between the fiber block 21 and the upper section 31a, and the fiber block 21 does not contact the upper section 31a. The lateral section 31c has an opening. The opening has an opening that is approximately equal to the diameter of the tube 22. Further, although the shape of the opening in which the tube 22 is housed is shown as rectangular as viewed from the longitudinal direction of the optical fiber 20 in Figure 5(d), the opening may also be U-shaped. **In** addition, the side wall of the opening that is opposite the tube 22 may be a face that is parallel to the longitudinal direction of the optical fiber 20, or may have a shape that widens from the inner side toward the outer side. **In** the latter case, the shape is highly effective for suppressing leakage of injected adhesive 40 to the upper section 31a on the inside.

As illustrated in Figure 5, the optical fiber coupling section protective section 31 of the present embodiment differs from the conventional optical fiber coupling section protective section 31 illustrated in Figure 2 in the respect that a pressing section 50 that is substantially perpendicular to the upper section 31a is formed in the vicinity of the lateral section 31c that has the opening.

The pressing section 50 is formed so that an end of the tube 22 is located at a predetermined position (that is, the appropriate position for the end of the tube 22). The tube 22 is inserted into the inner side of the lateral section 31c through the opening from the outer side of the lateral section 31c, and the tube 22 is fixed at a position where at least a part of the tube 22 abuts against the pressing section 50. **In** a state in which one end of the tube 22 abuts against the pressing section 50, the end of the tube 22 is positioned further on the inner side of the optical fiber coupling section protective section 31 than the opening of the lateral section 31c, and the other end of the tube 22 is positioned outside the lateral section 31c. Consequently, it is not necessary to perform delicate positioning under a microscope, and highly precise positioning can be performed easily in a short time. By bonding the tube 22 to the opening of the lateral section 31c in this state using the adhesive 40, the tube 22 is fixed across the entire thickness of the opening, thereby solving the aforementioned problem of reduced reliability caused by insufficient adhesive fixation.

When bonding the tube 22, any excess adhesive will fall onto the upper section 31a between the opening and the pressing section 50. If the fallen adhesive enters the gap between the fiber block 21 and the upper section 31a and results in the fiber block 21 and the upper section 31a being fixed together, there is a risk that force will be applied to the coupling section between the fiber block 21 and the silicon chip 23 accompanying expansion of the lid 30 during the reflow process, which may result in misalignment of the optical axis or a deterioration in the fixing strength of the fiber block 21. Therefore, it is desirable to prevent any fallen excess adhesive from entering the fiber block 21 side.

In the present embodiment, when forming the pressing section 50 by cutting, the cutting is performed in a state in which both ends of the pressing section 50 are in contact with the lateral section 31c. By this means, a closed region (hereinafter referred to as "adhesive housing section 51") is formed in the upper section 31a by the pressing section 50 and the lateral section 31c. As illustrated in Figure 5(d), by surrounding the region into which excess adhesive falls with a wall, the fallen adhesive can be prevented from spreading. The adhesive housing section 51 is formed between the pressing section 50 and the opening of the lateral section 31c. The outer wall of the adhesive housing section 51 includes at least the pressing section 50 and the lateral section 31c in the region where the opening is formed. That is, the portion on the opening side of the pressing section 50 and the portion of the opening of the lateral section 31c that faces the portion on the opening side of the pressing section 50 constitute a part of the adhesive housing section 51. In Figure 5(d), the pressing section 50 is formed so as to surround the opening, and both ends thereof are in contact with a part of the lateral section 31c. It can also be said in other words that when forming the adhesive housing section 51 by cutting, a portion of the side wall of the adhesive housing section 51 is used as the pressing section 50.

Note that, from the viewpoint of preventing fallen adhesive from spreading over the upper section 31a and entering the gap between the fiber block 21 and the upper section 31a, a groove may be formed by cutting deeper between the pressing section 50 and the region where the opening is formed (reducing the thickness from the rear surface of the upper section 31a), so that the groove becomes at least a part of the adhesive housing section 51. The groove will be described later.

For example, the following structure can be exemplified as the structure of the adhesive housing section 51. A thickness H1 of the opening of the lateral section 31c (thickness from the rear surface of the upper section 31a to the underside of the opening) is 0.9 mm. A thickness H2 of the adhesive housing section 51 of the lateral section 31c (thickness from the rear surface of the upper section 31a to the underside of the adhesive housing section 51) is 0.6 mm. A thickness H3 of the pressing section 50 (thickness from the rear surface of the upper section 31a to the tip of the pressing section 50) is 1.15 mm. A thickness H4 of the concave section of the lateral section 31c (thickness from the underside of the lateral section 31c to the underside of the opening) is 1.05 mm.

The length of the tube 22 (in the longitudinal direction of the optical fiber 20) is 2.0 mm. The outer diameter of the tube 22 is 0.9 mm. The inner diameter of the tube 22 is 0.82 mm. The thickness of the tube 22 is 0.04 mm. The width of the opening of the lateral section 31c is 1.2 mm. The clearance between the tube 22 and the opening is 0.15 mm.

A length L1 of the opening of the lateral section 31c (in the longitudinal direction of the optical fiber 20) is 1.75 mm. A space L2 between the portion on the opening side of the pressing section 50 and the opening of the lateral section 31c (the space of the adhesive housing section 51 in the longitudinal direction of the optical fiber 20) is 0.6 mm. A length L3 of the pressing section 50 (in the longitudinal direction of the optical fiber 20) is 0.2 to 0.3 mm. A space L4 between the pressing section 50 and the fiber block 21 is 0.347 mm.

In a state in which the end of the tube 22 abuts against the pressing section 50, when the adhesive 40 is inserted into the gap between the tube 22 and the lateral section 31c in the manner described with reference to Figure 4, excess adhesive will flow down into the adhesive housing section 51. Because the optical fiber 20 is covered by the tube 22 up to the pressing section 50, any excess adhesive 40 falls from both sides of the tube 22 in the vicinity of the opening before reaching the pressing section 50, and consequently the adhesive 40 does not adhere to the optical fiber 20 exposed between the fiber block 21 and the tube 22, and nor does the adhesive 40 flow into the hollow section of the tube 22 (that is, the tube 22 and the optical fiber 20 are not bonded together by the adhesive 40 in the hollow section).

Thus, according to the optical fiber coupling section protective section 31 of the present embodiment, the process of positioning a tip of the tube 22 on the fiber block 21 side, and the process of fixing the tube 22 to the opening of the lateral section 31c of the optical fiber coupling section protective section 31 with the adhesive 40 are easy to perform.

Hereunder, optical fiber coupling section protective sections 31 according to Examples 1 to 3 are described with reference to Figure 6 to Figure 8.

### (Example 1)

Figure 6 shows an optical fiber coupling section protective section 31 of a COSA according to one embodiment of the present disclosure. Figure 6(a) is a schematic plan view of a portion of the optical fiber coupling section protective section 31 as viewed from the underside. Figure 6(b) is a schematic cross-sectional view of a portion of the optical fiber coupling section protective section 31 taken along a VIb-VIb section line. Figure 6(c) is a cross-sectional view taken along a VIc-VIc section line. The rectangular pressing section 50 is formed substantially perpendicular to the upper section 31a at a position that is spaced apart from the opening on the inner side of the optical fiber coupling section protective section 31. The adhesive housing section 51 is formed between the lateral section 31c and the pressing section 50. The pressing section 50 constitutes a part of the side wall of the adhesive housing section 51. As illustrated in Figure 6(b), the adhesive housing section 51 is cut so as to be deeper (so that the thickness from a top surface 31TS of the upper section 31a is thinner) than in the example illustrated in Figure 5(d). Although in Figure 6 a width W of the rectangular pressing section 50 is made equal to the width of the opening, the width W may be narrower than the width of the opening as long as the width W is wide enough for a part of the tube 22 abut against, although it is better for the width W to be wider than the diameter of the tube 22. This is to prevent any excess adhesive that has fallen down from the tube 22 from passing by the side of the pressing section 50 and spreading toward the fiber block 21 side. Further, although the center of the width W is arranged so as to coincide with the center of the opening of the optical fiber coupling section protective section 31, it is not necessary to arrange the center of the width W so as to coincide with the center of the opening as long as the pressing section 50 is at a position where a part of the tube 22 abuts against the pressing section 50.

One example of the positional relationship between the pressing section 50 and the opening is as follows. The thickness H1 of the opening of the lateral section 31c (thickness from the top surface 31TS of the optical fiber coupling section protective section 31 to a position 31cBS of the opening) is 0.9 mm, and the thickness H3 of the pressing section 50 (thickness from the top surface 31TS of the optical fiber coupling section protective section 31 to a tip 50BS of the pressing section 50) is 1.15 mm. Therefore, as illustrated in Figure 6, when the tube 22 is inserted into the opening of the lateral section 31c, a part of the end of the tube 22 abuts against the pressing section 50 and stops. On the other hand, because the tube 22 has an inner diameter of 0.82 mm and a thickness of 0.04 mm, and the optical fiber 20 passes through the inside of the tube 22 opposite the abutting portion, the optical fiber 20 can pass through at a position that is sufficiently distant from the tip of the pressing section 50. There is a risk that the tip of the pressing section 50 will come into contact with the optical fiber 20 if the thickness H3 of the pressing section 50 is too large, and therefore it is desirable that the tip of the pressing section 50 is positioned at approximately the height of the center of the tube 22. In this way, the fiber block 21 is fixed in a state in which the fiber block 21 is optically coupled to the end face of the silicon chip 23.

In a state in which a part of the end of the tube 22 is abutting against the pressing section 50, the tube 22 is temporarily fixed to the opening of the optical fiber coupling section protective section 31 using the adhesive 40 as described above with reference to Figure 4, and thereafter the fillets 40a and 40b are formed. Because the end of the tube 22 that is abutting against the pressing section 50 is in the predetermined appropriate position (that is, a position that can prevent adhesion of the adhesive 40), it is not necessary to perform positioning under a microscope. Further, in the state in which the tube 22 is abutting against the pressing section 50, because the length of the tube 22 from the opening to the pressing section 50 is sufficient, any excess adhesive 40 flows down into the adhesive housing section 51 in the vicinity of the opening from both sides of the tube 22 without reaching the pressing section 50, and therefore the adhesive 40 does not adhere to the optical fiber 20. Although the pressing section 50 of Example 1 has a shape in which a face perpendicular to the longitudinal direction of the optical fiber 20 is a wide and low rectangular shape, the pressing section 50 can also be formed in other shapes, as exemplified hereunder.

### (Example 2)

A pressing section 50a in which a face perpendicular to the longitudinal direction of the optical fiber 20 is a narrow and tall rectangular shape will be described with reference to Figure 7. The configuration of Example 2 differs from the configuration of Example 1 illustrated in Figure 6 in that, whereas the configuration of Example 1 has one pressing section 50, the configuration of Example 2 has two columnar pressing sections 50a. Figure 7 shows an optical fiber coupling section protective section 31 of a COSA according to one embodiment of the present disclosure. Figure 7(a) is a schematic plan view of the underside of a portion of the optical fiber coupling section protective section 31. Figure 7(b) is a schematic cross-sectional view of a portion of the optical fiber coupling section protective section 31 taken along a VIIb-VIIb section line. Figure 7(c) is a cross-sectional view taken view along a VIIc-VIIc section line.

As illustrated in Figure 7, two pressing sections 50a are formed substantially perpendicular to the upper section 31a of the optical fiber coupling section protective section 31 at positions on the device substrate 10 (not illustrated) side that are spaced apart from the lateral section 31c that has the opening of the optical fiber coupling section protective section 31. In the present Example 2, the adhesive housing section 51 is formed in the upper section 31a by cutting a region between the opening and the pressing section 50a, which includes the region where excess adhesive falls. In the present Example 2, two columnar pressing sections 50a are connected by a portion cut into a rectangular flat-plated shape, and these parts constitute part of the side wall of the adhesive housing section 51.

The interval between the two columnar pressing sections 50a is an interval that allows a part of each of the two pressing sections 50a to abut against the two ends in the horizontal direction of the cross section of the tube 22, respectively. Because the respective abutting portions of the two pressing sections 50a are formed at the same distance from the opening, in a state in which the abutting portions abut against the tube 22 at at two points, the tube 22 is arranged parallel to the optical fiber 20. Pressing against the tube 22 at at two points can prevent the tube 22 from tilting, and hence there is the advantage that the tube 22 can be arranged parallel to the optical fiber 20. Therefore, contact between the tube 22 and the optical fiber 20 can be prevented. Although the two pressing sections 50a have the same width Wa, the two pressing sections 50a may have different widths to each other. In addition, the two pressing sections 50a are arranged so that the center of the interval between the two pressing sections 50a is the center of the opening of the optical fiber coupling section protective section 31. However, as long as a part of the tube 22 is at a position abutting against at least one of the two pressing sections 50a, the center of the interval between the two pressing sections 50a does not have to be the center of the opening of the optical fiber coupling section protective section 31. Further, although the present Example 2 has a connecting section between the two pressing sections 50a, the shape and size of the connecting section are not limited to a rectangle as long as the connecting section does not come into contact with the optical fiber 20. Although the connecting section need not be provided, in a case where there is a risk that fallen adhesive will spread, it is necessary to increase the depth of the adhesive housing section 51.

The tips 50BS of the two pressing sections 50a are located at positions near the lower side of the tube 22 (the side closer to the optical fiber 20), and the underside of the connecting section (the face that is not in contact with 31a) has a thickness that is approximately the same as the thickness H1 of the opening. One example of the present Example 2 is as follows. The thickness H1 of the opening of the lateral section 31c (thickness from the top surface 31TS of the optical fiber coupling section protective section 31 to the position 31cBS of the opening) is 0.9 mm, and a thickness H3a from the top surface 31TS to the tip 50aBS of each pressing section 50a is 1.8 mm. The approximate difference between the inner diameter and outer diameter of the tube 22 (about 0.82 mm to 0.9 mm) is suitable as the interval between the two pressing sections 50a. This is because the tube 22 is an elliptical shape and therefore extends slightly in the lateral direction. Therefore, in the structure of the present Example 2, as illustrated in Figure 7, when inserting the tube 22 into the opening of the lateral section 31c, both sides of the tube 22 simultaneously abut against the two pressing sections 50a and stop. On the other hand, the optical fiber 20 inserted into the hollow section of the tube 22 can pass through the space between the two pressing sections 50a. In this way, optical coupling can be caused between the end face of the fiber block 21 fixed to the tip of the optical fiber 20 and the end face of the silicon chip 23.

The present Example 2 has the same advantageous effect as Example 1, and in addition, with respect to the adhesive housing section of the present Example 2, by having a configuration that causes the tube 22 to abut against the two pressing sections 50a, not only is there the advantage that the arrangement of the tube 22 can be made parallel to the optical fiber 20 in the abutting process, but there is also the advantage that the abutting process can easily be performed with greater accurately and with higher reliability as compared to a configuration in which the tube 22 abuts against one place.

### (Example 3)

Example 3, which is a modification of Example 2, will be described with reference to Figure 8. Figure 8(a) is a schematic plan view of the underside of a portion of the optical fiber coupling section protective section 31. Figure 8(b) is a cross-sectional view of a portion of the optical fiber coupling section protective section 31 taken along a VIIIb-VIIIb section line. Figure 8(c) is a cross-sectional view taken along a VIIIc-VIIIc section line. As illustrated in Figure 8, the pressing section may also be L-shaped or hook-shaped. A configuration may be adopted in which a columnar central portion that is substantially perpendicular to the upper section 31a serves as the pressing section 50a, and a portion that is substantially horizontal to the upper section 31a constitutes a part of the adhesive housing section 51.

### (Other Modifications)

Although in Example 1 illustrated in Figure 6, the tip 50BS of the pressing section 50 is shown as rectangular, the pressing section 50 may have a shape that surrounds the opening. In such case, it is sufficient to adopt a shape such that any falling adhesive will fall down into the adhesive housing section 51, so that there is thus no risk that fallen adhesive will spread. In Example 1 illustrated in Figure 6, by making the width of the pressing section 50a wider than the outer diameter of the tube 22, spreading of adhesive that falls down can be prevented. As a modification of this example, the width of the pressing section 50 may be extended as far as the lateral section 31b to reinforce the role of preventing the spread of adhesive that falls down. At such time, the extended portion may be a flat shape or a shape that has a curved surface, and as long as the angle between the central portion (portion having the width W) and the extended portion is between 90 degrees and 180 degrees, the component will serve to prevent the spread of fallen adhesive. Further, as a modification of Figure 7 and Figure 8, the width of the columnar pressing section 50a may be extended as far as the lateral section 31b to reinforce the role of preventing the spread of adhesive that falls down. At such time, the extended portion may be a flat shape or a shape that has a curved surface, and as long as the angle between the columnar pressing section 50a (portion having the width Wa) and the extended portion is between 90 degrees and 180 degrees, the component will serve to prevent the spread of fallen adhesive.

### Reference Signs List

- 100: Optical Module (COSA)
- 10: Device Substrate
- 20: Optical Fiber
- 21: Fiber Block
- 22: Tube
- 23: Silicon Chip
- 24: Fiber Protection Resin
- 30: Lid
- 31: Optical Fiber Coupling Section Protective Section
- 31a: Upper Section
- 31b: Lateral Section
- 31c: Lateral Section Having Opening
- 32a: Upper Section
- 32b: Lateral Section
- 40: Adhesive
- 40a, 40b: Fillet
- 50, 50a: Pressing Section
- 51: Adhesive Housing Section

## Claims

1. A component used for a connection section between a silicon chip integrated on a device substrate and an optical fiber, comprising:
a flat plate-like upper section, and a first lateral section and a second lateral section that are substantially perpendicular to the upper section;
a concave section that is formed by the upper section, the first lateral section, and the second lateral section, with the second lateral section having an opening; and
a pressing section that is formed on the upper section inside the concave section and that is substantially perpendicular to the upper section, and that is formed at a position facing the opening.

2. The component according to claim 1, further comprising:
a tube having a hollow section which the optical fiber passes through that is placed in the opening, wherein:
the pressing section is formed at a position at which the pressing section abuts against a part of the tube and does not come into contact with the optical fiber.

3. The component according to claim 2, wherein:
the pressing section is formed so as to abut against a part of the tube at a single point.

4. The component according to claim 2, wherein:
the pressing section is formed so as to abut against a part of the tube at at two points.

5. The component according to claim 4, wherein:
the pressing section that abuts against the part of the tube at the at two points is connected to the upper section side.

6. The component according to claim 2, further comprising:
an adhesive housing section formed between the pressing section and the opening.

7. The component according to claim 6, wherein:
the adhesive housing section is formed by cutting further than a face where the pressing section is formed.

8. An optical module, comprising:
the component according to any one of claims 1 to 7,
the device substrate, and
a waveguide formed on a surface of the silicon chip, wherein:
the waveguide and the optical fiber are optically coupled at an end face of the silicon chip.
